# EUROPEAN PATENT SPECIFICATION

(11) **EP 2 728 225 B1**
(45) Date of publication and mention of the grant of the patent: **04.01.2017**
(21) Application number: 13005200.4
(22) Date of filing: 04.11.2013
(51) Int. Cl.: F16J 15/32, F16J 15/34

(54) **Sealing Construction**
Abdichtungskonstruktion
Construction d'étanchéité

(30) Priority: 06.11.2012 JP 2012244081
(43) Date of publication of application: 07.05.2014
(73) Proprietor: Carl Freudenberg KG, 69469 Weinheim (DE)
(72) Inventor: Hamamoto, Kokichi, Fukushima-shi, Fukushima, 960-1193 (JP); ONO, Shigeyuki, Fukushima-shi, Fukushima, 960-1193 (JP)

(56) References cited:
- GB-A- 580 957
- US-A- 4 861 044

## Description

### Technical field

The present invention relates to an sealing construction, that is provided with a seal flange formed integrally with a rotating shaft having a substantially horizontal axis, and a seal lip comprising a root, wherein the seal lip is mounted on a non-rotating housing side through which the abovementioned rotating shaft is inserted, wherein the seal lip is in slidable intimate contact with the abovementioned seal flange and wherein an annular ridge which is continuous in the circumferential direction is formed integrally on the outer circumferential surface of the abovementioned rotating shaft.

The sealing construction is used as means for hermetically sealing a substantially horizontal rotating shaft in an automobile or an industrial machine, and which effects sealing by causing a seal lip to come into intimate contact with an end surface that is perpendicular to an axis.

### Background art

Such a sealing construction as described above is known from GB 580 957 A. The shaft is built as a crankshaft terminating at one end with a seal flange and having near the seal flange an annular ridge to prevent oil from leaking through the bearing of the crankshaft to the seal flange. The known annular ridge serves as an oil thrower in a manner known per se, the oil thrown thereby being received by an annular chamber whence it can drain by gravity into a sump to be removed therefrom. In axial direction there is a gab between the seal flange and the oil thrower and the sealing ring with the seal lip is arranged in the space of the gab. The oil thrower is spaced apart the sealing ring in axial direction. As sealing devices, end-surface lip-type sealing devices are known in which sealing is effected by causing a seal lip to come into intimate contact with an end surface that is perpendicular to an axis (see for example patent literature article 1 mentioned hereinbelow).

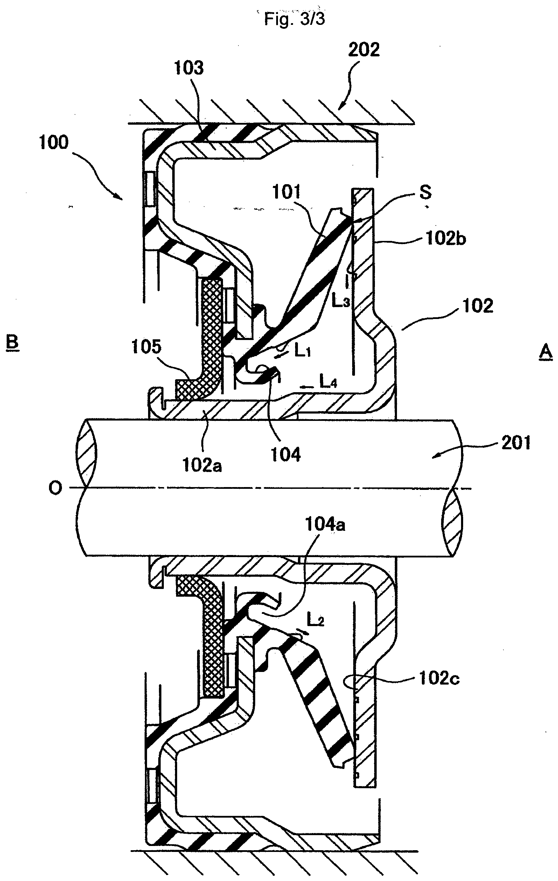

Figure 3 illustrates a typical example of this type of sealing device in the prior art, where reference code 201 is a rotating shaft having a substantially horizontal axis O, and reference code 202 is a non-rotating housing through which the rotating shaft 201 is inserted. A sealing device 100 prevents oil, which is the target of the sealing and is present within an in-machine space A to the right in Figure 3, from leaking from the inner circumference of the housing 202 to an out-of-machine space B to the left in Figure 3, and it is provided with a stationary-side seal lip 101 comprising a rubber-like resilient material which is mounted on the housing 202 side, and a metal rotating-side slinger 102 which is mounted on the outer circumferential surface of the rotating shaft 201. The seal lip 101 spreads in a tapered manner in such a way that its distal end faces the outer circumferential side, and it is moulded integrally with a metal ring 103 and is secured to the inner circumferential surface of the housing 202 by the metal ring 103. A trough-shaped oil catcher 104 which is continuous in the circumferential direction is formed in a diametrically inner portion of the seal lip 101. Meanwhile, the slinger 102 has a cylindrical portion 102a which mates with the outer circumference of the rotating shaft 201, and a seal flange 102b spreading in the shape of a disk from one end thereof with which the distal end of the seal lip 101 comes into intimate contact. Further, a spiral groove 102c which extends in a centripetal direction relative to the direction of rotation is formed in the seal flange 102b on the surface which faces the seal lip 101.

In other words, in the sealing device 100, at a sliding portion S between the end surface of the seal flange 102b which is perpendicular to the axis O and the seal lip 101 which is in intimate contact therewith, oil, which is the target of the sealing, in the in-machine space A is prevented from passing through to the inner circumferential side of the seal lip 101 by means of a spinning-off action of the seal flange 102b which rotates integrally with the rotating shaft 201, and a screw pump effect of the spiral groove 102c. Further, a dust lip 105 comprising a non-woven fabric is provided to the out-of-machine space B side of the seal lip 101, and by a diametrically inner portion thereof being in intimate contact with the cylindrical portion 102a of the slinger 102, penetration of foreign matter from the out-of-machine space B is prevented.

Then, if oil, which is the target of the sealing, in the in-machine space A has penetrated to the sliding portion S between the seal flange 102b of the slinger 102 and the seal lip 101, above the axis O of the rotating shaft 201, and has passed through to the inner circumferential side of the sliding portion S, then above the axis O of the rotating shaft 201, oil that has leaked in trickles down along the side surface of the seal lip 101 as indicated by the reference code L₁ in Figure 3, is captured by the trough-shaped oil catcher 104, runs down along the oil catcher 104 to below the axis O of the rotating shaft 201, and then trickles down from a lower end portion 104a of the oil catcher 104 along the side surface of the seal lip 101 toward the sliding portion S, as indicated by the reference code L₂, and is returned to the outer circumferential side of the sliding portion S by means of a spinning-off action (centrifugal force) due to the rotation of the slinger 102. Therefore oil that has passed through the sliding portion S and has leaked to the inner circumferential side can be effectively prevented from further passing through the dust lip 105 comprising a non-woven fabric and flowing out to the out-of-machine space B side, for example.

[Patent literature article 1] Japanese Patent Kokai 1995-208610

### Summary of the invention

### Problems to be resolved by the invention

However, according to the sealing device having the abovementioned conventional construction there are problems in that, during mounting thereof on a piece of equipment, in addition to press-fitting the metal ring 103 which is integral with the seal lip 101 into the inner circumferential surface of the housing 202, the slinger 102 must also be press-fitted onto the outer circumferential surface of the rotating shaft 201, and moreover there is a large number of components.

Further, in a state in which the rotating shaft 201 has stopped rotating, in particular if a spiral groove 102c is formed in the seal flange 102b of the slinger 102, as in the example illustrated in the drawings, oil, which is the target of the sealing, in the in-machine space A is liable to pass to the inner circumferential side through the sliding portion S between the seal flange 102b and the seal lip 101. Then, if for example the rotating shaft 201 stops in a state in which it is inclined such that the left side in Figure 3 is lower, there is a danger that oil, which is the target of the sealing, which has passed through from the outer circumferential side of the sliding portion S to the inner circumferential side above the axis 0 of the rotating shaft 201 may trickle down the end surface of the seal flange 102b in which a spinning-off action is no longer being generated because it has stopped rotating, as indicated by the reference code L₃, and further that a portion thereof may flow toward the side that is lower due to the inclination, along the outer circumferential surface of the cylindrical portion 102a of the slinger 102, as indicated by the reference code L₄, passing through the dust lip 105 comprising a non-woven fabric and flowing out to the out-of-machine space B side.

The present invention takes account of problems such as those described hereinabove, and its technical challenge is, in a sealing construction in which sealing of the axial circumference of a rotating shaft having a substantially horizontal axis is effected by causing a seal lip to come into intimate contact with a seal flange, to provide a construction in which the number of components can be reduced and which is as far as possible capable of preventing fluid, which is the target of the sealing and which has passed to the inner circumference of the seal lip through a sliding portion between the seal flange and the seal lip when the shaft is stationary, from flowing out to an out-of-machine space.

### Means of overcoming the problem

As means for effectively overcoming the technical challenge discussed hereinabove, the sealing construction according to the invention of Claim 1 is provided with a seal flange formed integrally with a rotating shaft having a substantially horizontal axis, and a seal lip comprising a root wherein the seal lip is mounted on a non-rotating housing side through which the abovementioned rotating shaft is inserted, wherein the seal lip is in slidable intimate contact with the abovementioned seal flange and wherein an annular ridge which is continuous in the circumferential direction is formed integrally on the outer circumferential surface of the abovementioned rotating shaft, wherein the annular ridge is radially positioned on the inner circumferential side of the root of the abovementioned seal lip.

In the abovementioned configuration, when the rotating shaft has stopped and the spinning-off action due to the centrifugal force during rotation is no longer generated, if fluid passes through from the outer circumferential side of the sliding portion between the seal flange and the seal lip to the inner circumferential side of the abovementioned sliding portion, above the axis of the substantially horizontal rotating shaft, fluid that has leaked and that trickles down the seal flange is held back by the annular ridge which is formed on the outer circumferential surface of the rotating shaft and is continuous in the circumferential direction, trickles down from between the abovementioned annular ridge and the seal flange toward the bottom position of the seal lip, below the axis of the rotating shaft, and is expelled to the outer circumferential side of the abovementioned sliding portion by means of the spinning-off action generated by the rotation of the seal flange when the rotating shaft rotates.

### Advantages of the invention

According to the sealing construction of the present invention, even if, when the rotating shaft is stationary, fluid passes through from the outer circumferential side of the sliding portion between the seal flange and the seal lip to the inner circumferential side, above the axis of the substantially horizontal rotating shaft, this fluid is held back by the annular ridge which is formed on the outer circumferential surface of the rotating shaft, trickles down the seal flange toward the bottom position of the abovementioned sliding portion, and is expelled to the outer circumferential side of the abovementioned sliding portion by means of the spinning-off action of the seal flange when the rotating shaft rotates, and therefore fluid can be prevented from flowing out from the axial circumference, and moreover the seal flange and the annular ridge are formed integrally with the rotating shaft and therefore the number of components can be reduced.

### Brief explanation of the figures

- Figure 1: Cross-sectional view illustrating a preferred mode of embodiment of the sealing construction according to the present invention, in a planar section passing through the axis O.
- Figure 2: View of the seal flange and annular ridge in the embodiment in Figure 1 as seen from the out-of-machine space B side.
- Figure 3: Cross-sectional view illustrating an example of a sealing construction according to the prior art, in a planar section passing through the axis O.

### Mode of embodying the invention

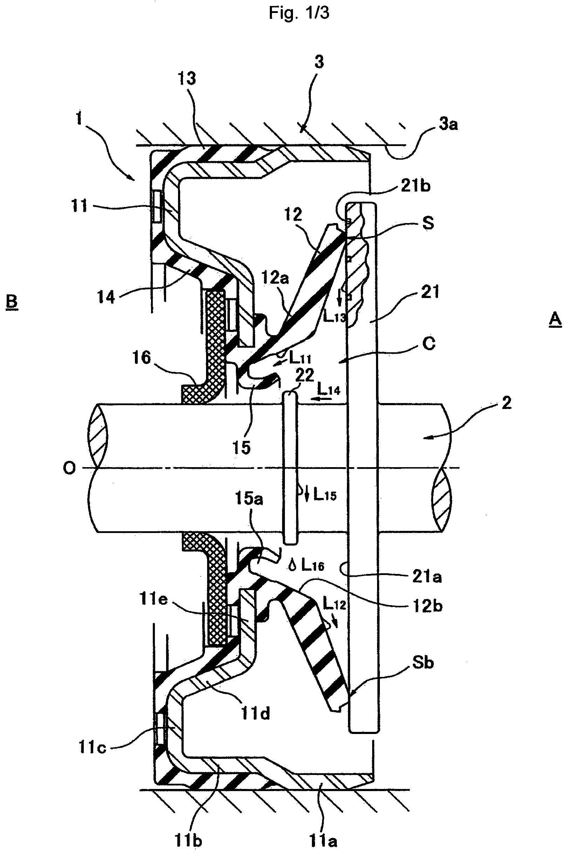

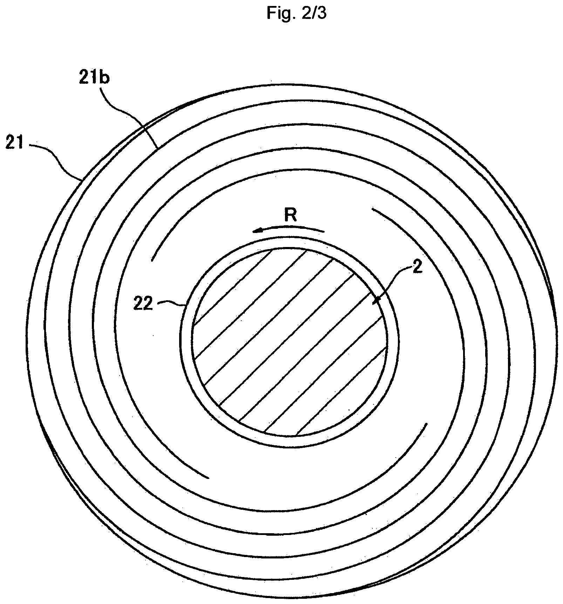

A preferred mode of embodiment of the sealing construction according to the present invention will now be described with reference to Figure 1 and Figure 2.

Reference code 2 in Figure 1 is a rotating shaft having a substantially horizontal axis O, and reference code 3 is a non-rotating housing through which the rotating shaft 2 is inserted. A disk-shaped seal flange 21 is formed integrally with the rotating shaft 2. Further, a spiral groove 21b is formed in an end surface 21a, facing an out-of-machine space B side, of the seal flange 21, the spiral groove 21 b extending in a centripetal direction relative to the direction of rotation R, as illustrated in Figure 2.

Reference code 1 is a seal main body, provided with a seal lip 12 which is in slidable intimate contact with the end surface 21a, facing the out-of-machine space B side, of the seal flange 21 of the rotating shaft 2, and it prevents oil, which is the target of the sealing and is present within an in-machine space A to the right in Figure 1, from leaking from the inner circumference of the housing 3 to the out-of-machine space B to the left in Figure 1.

Specifically, the seal main body 1 comprises a mounting ring 11 which is press-fitted into an inner circumferential surface 3a of the housing 3, a seal lip 12, a gasket portion 13, a resilient layer 14 and an oil catcher 15 which are moulded integrally with the mounting ring 11 using a rubber-like elastic material (a rubber material or a synthetic resin material having rubber-like resilience), and a dust filter 16. The seal lip 12, gasket portion 13, resilient layer 14 and oil catcher 15 are produced by being vulcanisation bonded to the mounting ring 11 at the same time as being vulcanisation moulded, by positioning and setting the mounting ring 11 in a die which is not shown in the drawings, filling an annular cavity defined between the mounting ring 11 and the inner surface of the die with an unvulcanised rubber material when the mould is clamped, and applying heat and pressure.

The mounting ring 11 in the seal main body 1 is produced by press-machining a metal plate such as a steel plate, and it comprises an outer-circumferential fitting portion 11 a which is press-fitted into the inner circumferential surface 3a of the housing 3, a slightly smaller-diameter gasket supporting portion 11 b which is formed on the opposite side to the in-machine space A in a stepped manner from the outer-circumferential fitting portion 11a,, a radial-direction portion 11 c which extends therefrom toward the diametrically inner side, a tapered cylindrical portion 11d which extends from the diametrically inner end portion thereof in such a way that its diameter gradually reduces toward the in-machine space A side, and a flange portion 11e which extends toward the diametrically inner side from the end portion thereof.

The seal lip 12 of the seal main body 1 is in the shape of a tapered cylinder, a distal end of which faces toward an outer circumferential side, with the diametrically inner end of the resilient layer 14 positioned at the diametrically inner end of the flange portion 11e of the mounting ring 11 serving as a root portion, and it extends toward the in-machine space A side, an area in the vicinity of its distal end being in slidable intimate contact with the end surface 21 a, facing the out-of-machine space B side, of the seal flange 21.

The gasket portion 13 of the seal main body 1 is formed at the diametrically outer end of the resilient layer 14, positioned at the outer circumference of the gasket supporting portion 11 b of the mounting ring 11, and by being interposed between the same and the inner circumferential surface 3a of the housing 3 with a prescribed amount of compression the hermeticity of the gap to the housing 3 is maintained.

The oil catcher 15 of the seal main body 1 is formed in the diametrically inner portion of the resilient layer 14, and it is in the shape of a trough, the distal end of which faces to the seal lip 12 side.

The dust filter 16 of the seal main body 1 comprises a non-woven fabric of synthetic resin fibres, its diametrically outer portion being joined to the resilient layer 14 on the out-of-machine space B side of the oil catcher 15, and its diametrically inner portion being in slidable intimate contact with the outer circumferential surface of the rotating shaft 2.

An annular ridge 22 which is continuous in the circumferential direction is formed on the outer circumferential surface of the rotating shaft 2, positioned on the inner circumferential side of a root 12a of the seal lip 12. The annular ridge 22 is formed with a diameter that is slightly smaller than that of the oil catcher 15 so that it does not interfere with the oil catcher 15 and the like.

According to the sealing construction configured as described hereinabove, as illustrated in Figure 1, in the seal main body 1 the outer-circumferential fitting portion 11a of the mounting ring 11 is press-fitted into the inner circumferential surface 3a of the housing 3 while the gasket portion 13 is fitted intimately, with an appropriate amount of compression, and the seal lip 12 of the seal main body 1 slides in intimate contact with the end surface 21 a of the seal flange 21 formed on the rotating shaft 2, and thus oil, which is the target of the sealing, in the form of mist on the in-machine space A side is prevented from leaking to the out-of-machine space B side. In particular, when the rotating shaft 2 is rotating, the action of the seal flange 21 is such that fluid in contact therewith is spun off in the radially outward direction by means of a centrifugal force, and in addition, rotation of the spiral groove 21 b formed in the end surface 21 a of the seal flange 21 generates a screw pump action sending fluid to the diametrically outer side, and therefore an excellent hermetic sealing function is exhibited in relation to oil, which is the target of the sealing, that tries to pass to the inner circumferential side through the portion S which slides against the seal lip 12.

Then, as discussed hereinabove, In addition to the action whereby the seal flange 21 of the rotating shaft 2 expels fluid from the sliding portion S to the diametrically outer side by means of a centrifugal force during rotation, the spiral groove 21b formed in the seal flange 21 also acts to expel fluid from the sliding portion S to the diametrically outer side by means of a screw pump action, and therefore a negative pressure is generated in an inner circumferential space C in the seal lip 12, by means of which dust tries to flow into the abovementioned inner circumferential space C together with air from the out-of machine space B side, but this dust is captured by the dust filter 16 comprising a non-woven fabric of synthetic fibres, and therefore dust can be effectively prevented from flowing into the abovementioned inner circumferential space C and becoming caught in the sliding portion S.

Further, in a state in which the rotating shaft 2 has stopped rotating, the spinning-off action and the screw pump action of the spiral groove 21b resulting from the rotation of the seal flange 21 are lost, and there is therefore a danger that a small amount of oil, which is the target of the sealing, on the in-machine space A side, may pass to the inner circumferential side through the sliding portion S between the seal lip 12 and the seal flange 21. In this case, however, on the upper half portion side of the seal lip 12 (the side above the axis 0), a portion of the oil which has flowed into the inner circumferential side of the sliding portion S flows downward along the tapered outer surface of the seal lip 12, as indicated by the reference code L₁₁ in Figure 1, and is caught by the trough-shaped oil catcher 15. This oil further flows along the inside of the abovementioned oil catcher 15 toward the lower half portion 15a side (the side below the axis 0), and as indicated by the reference code L₁₂ it runs down the outer surface of the lower half portion of the seal lip 12 to a bottom position Sb of the portion of intimate contact between the seal lip 12 and the seal flange 21, and therefore when the rotating shaft 2 is driven, the oil is spun off by means of a centrifugal force from the portion S which slides against the seal flange 21 to the diametrically outer side and is removed.

On the other hand, on the upper half portion side of the seal lip 12, another portion of the oil which has flowed into the inner circumferential side of the sliding portion S runs down the end surface 21 a of the seal flange 21 as indicated by the reference code L₁₃ in Figure 1, and further if for example the axis O of the rotating shaft 2 is slightly inclined such that the left side in Figure 1 is lower, a portion of the oil as indicated by the reference code L₁₄ tries to flow along the outer circumferential surface of the rotating shaft 2 toward the out-of-machine space B side, but such a flow L₁₄ is held back by the annular ridge 22 formed on the outer circumferential surface of the rotating shaft 2, runs down the annular ridge 22 as indicated by the reference code L₁₅, and below the axis O drips, as L₁₆, onto an outer surface 12b of the outer surface of the lower half portion of the seal lip 12, to the seal flange 21 side of the oil catcher 15, and runs down to the bottom position Sb of the portion of intimate contact between the seal lip 12 and the seal flange 21, and therefore in the same way as discussed hereinabove, when the rotating shaft 2 is driven, the oil is spun off by means of a centrifugal force from the portion S which slides against the seal flange 21 to the diametrically outer side and is removed.

Thus even if oil, which is the target of the sealing, enters the inner circumferential space C of the seal lip 12 from the in-machine space A when the rotating shaft 2 has stopped, this oil can be effectively prevented from leaking further from the axial circumference to the out-of-machine space B, and can be returned to the in-machine space A during rotation.

Then, according to the abovementioned configuration, the seal flange 21 and the annular ridge 22 are formed integrally with the rotating shaft 2, and therefore the number of components and the processes to press-fit the components can be reduced.

### Explanation of the reference numbers

- 1: Seal main body
- 11: Mounting ring
- 12: Seal lip
- 15: Oil catcher
- 16: Dust filter
- 2: Rotating shaft
- 21: Seal flange
- 21b: Spiral groove
- 22: Annular ridge
- 3: Housing
- A: In-machine space
- B: Out-of-machine space
- S: Sliding portion

## Claims

1. Sealing construction that is provided with a seal flange (21) formed integrally with a rotating shaft (2) having a substantially horizontal axis, and a seal lip (12) comprising a root (12a), wherein the seal lip (12) is mounted on a non-rotating housing side through which the abovementioned rotating shaft (2) is inserted, wherein the seal lip (12) is in slidable intimate contact with the abovementioned seal flange (21) and wherein an annular ridge (22) which is continuous in the circumferential direction is formed integrally on the outer circumferential surface of the abovementioned rotating shaft (2), **characterized in that** the annular ridge (22) is radially positioned on the inner circumferential side of the root (12a) of the abovementioned seal lip (12).

## Patentansprüche

1. Abdichtungskonstruktion, die mit einem Dichtungsflansch (21), der mit einer eine im Wesentlichen horizontale Achse aufweisenden rotierenden Welle (2) integral ausgebildet ist, und einer Dichtungslippe (12), die einen Fuß (12a) umfasst, versehen ist, wobei die Dichtungslippe (12) auf einer nicht rotierenden Gehäuseseite befestigt ist, durch die oben erwähnte rotierende Welle (2) eingeführt ist, wobei die Dichtungslippe (12) in engem Gleitkontakt mit dem oben erwähnten Dichtungsflansch (21) steht und wobei ein ringförmiger Steg (22), der in der Umfangsrichtung durchgängig ist, integral auf der Außenumfangsfläche der oben erwähnten rotierenden Welle (2) ausgebildet ist, **dadurch gekennzeichnet, dass** der ringförmige Steg (22) radial auf der Innenumfangsseite des Fußes (12a) der oben erwähnten Dichtungslippe (12) positioniert ist.

## Revendications

1. Structure d'étanchéité pourvue d'une collerette d'étanchéité (21) formée d'un seul tenant avec un arbre rotatif (2) présentant un axe essentiellement horizontal, et une lèvre d'étanchéité (12) comprenant une base (12a), la lèvre d'étanchéité (12) étant montée sur un côté de logement non rotatif à travers lequel est inséré ledit arbre rotatif (2), la lèvre d'étanchéité (12) étant en contact étroit glissant avec ladite collerette d'étanchéité (21) et une nervure annulaire (22) qui est continue dans la direction circonférentielle étant formée d'un seul tenant sur la surface circonférentielle extérieure dudit arbre rotatif (2), **caractérisée en ce que** la nervure annulaire (22) est positionnée radialement sur le côté circonférentiel intérieur de la base (12a) de ladite lèvre d'étanchéité (12).
